(19) Europäisches Patentamt

European Patent Office

Office européen des brevets

(11) Veröffentlichungsnummer: **0 380 737**
**A1**

(12) **EUROPÄISCHE PATENTANMELDUNG**

(21) Anmeldenummer: **89109320.5**

(22) Anmeldetag: **24.05.89**

(51) Int. Cl.⁵: **G01F 23/68**

(30) Priorität: **26.01.89 DE 3902285**

(43) Veröffentlichungstag der Anmeldung:
**08.08.90 Patentblatt 90/32**

(84) Benannte Vertragsstaaten:
**DE FR IT SE**

(71) Anmelder: **VDO Adolf Schindling AG**
**Gräfstrasse 103**
**D-6000 Frankfurt/Main 90(DE)**

(72) Erfinder: **Schneider, Dieter**
**Im Sperber 10**
**D-6000 Frankfurt/Main 1(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Niveaugeber.**

(57) Ein Niveaugeber hat in einem Wicklungsrohr (1) eine Wicklung (4), die aus zwei parallellaufenden, unterschiedlich gepolten Widerstandsdrähten (2, 3) gebildet ist. Ein entlang des Wicklungsrohres (1) verschieblicher Schwimmer (5) vermag mit seinen Schleifern (6, 7) die beiden Widerstandsdrähte (2, 3) zu überbrücken und dadurch ein niveauabhängiges Signal zu erzeugen.

EP 0 380 737 A1

## Niveaugeber

Die Erfindung betrifft einen Niveaugeber, insbesondere für Kraftstoffbehälter von Kraftfahrzeugen, welcher auf einem Wicklungsträger eine elektrische Wicklung hat, gegen welche ein Schleifer eines entlang des Wicklungsträgers verschieblichen Schwimmers anliegt. Solche Niveaugeber sind im Kraftstoffbehälter heutiger Kraftfahrzeuge eingebaut und deshalb allgemein bekannt.

Bei den Niveaugebern der vorstehenden Art schließt der Schwimmer über die Wicklung des Wicklungsträgers einen Stromkreis zwischen zwei unterschiedlichen Polen der Fahrzeugbatterie. Je nach Lage des Schwimmers ergibt sich infolge der dann abgegriffenen, unterschiedlichen Wicklungslänge ein unterschiedlicher Widerstand, wodurch ein unterschiedlicher Stromfluß entsteht, der ein Maß für die Lage des Schwimmers und dadurch für den zu ermittelnden Füllstand ist.

Um einen Stromkreis über die Wicklung schließen zu können, muß man den Schwimmer mit einem elektrischen Pol verbinden. Das geschieht bei den bekannten Niveaugebern entweder über einen schraubenförmig gewickelten, zum Schwimmer führenden Draht, oder durch eine gegenüber der Wicklung isolierte Leiterbahn, gegen die der Schwimmer mit einem zweiten Schleifer anliegt. Beide Arten der Spannungszufuhr zum höhenverschieblichen Schwimmer sind relativ aufwendig und spielen bei den Gesamtkosten eines solchen Niveaugebers eine beträchtliche Rolle.

Der Erfindung liegt die Aufgabe zugrunde, einen Niveaugeber der eingangs genannten Art so auszubilden, daß er möglichst kostengünstig hergestellt werden kann.

Diese Aufgabe wird erfindungsgemäß dadurch gelöst, daß die Wicklung von zwei sich gegenseitig nicht berührenden, parallel zueinander verlaufenden und an unterschiedlichen Polen angeschlossenen Widerstandsdrähten gebildet ist.

Durch diese Gestaltung trägt der Wicklungsträger zwei Wicklungen unterschiedlicher Polarität, die vom Schleifer des Schwimmers in der sich jeweils durch die Höhenlage des Schwimmers ergebenden Position überbrückt werden. Dadurch ist kein separates, eine Leiterbahn tragendes Bauteil für die Spannungszufuhr zum Schwimmer erforderlich. Auch entfällt die Spannungszufuhr zum Schwimmer durch einen koaxial zum Wicklungsträger verlaufenden, schraubenförmigen Leiter. Die Wicklung auf dem Wicklungsträger ist gemäß der Erfindung als Bifilarwicklung ausgeführt und deshalb sehr kostengünstig herstellbar, so daß der Niveaugeber als Ganzes kostengünstig herstellbar ist.

Um auszuschließen, daß der Schwimmer in Stellungen gelangen kann, in der er mit seinem Schleifer nur eine Wicklung berührt, so daß kein Stromkreis geschlossen wird und deshalb kein Füllstandssignal gewonnen werden kann, ist es zweckmäßig, wenn gemäß einer vorteilhaften Ausgestaltung der Erfindung der Schwimmer mehrere in der Höhe geringfügig zueinander versetzte Schleifer hat.

Der Bauaufwand ist besonders gering, wenn der Schwimmer zwei gegenüberliegende, in der Höhe geringfügig zueinander versetzte Schleifer hat. Hierdurch wird gegenüber einer Ausführungsform mit nur einem Schleifer zugleich erreicht, daß der Schwimmer durch die Federkraft der Schleifer stets in einer Mittelstellung gehalten ist, so daß er nicht zu einem Verklemmen neigt.

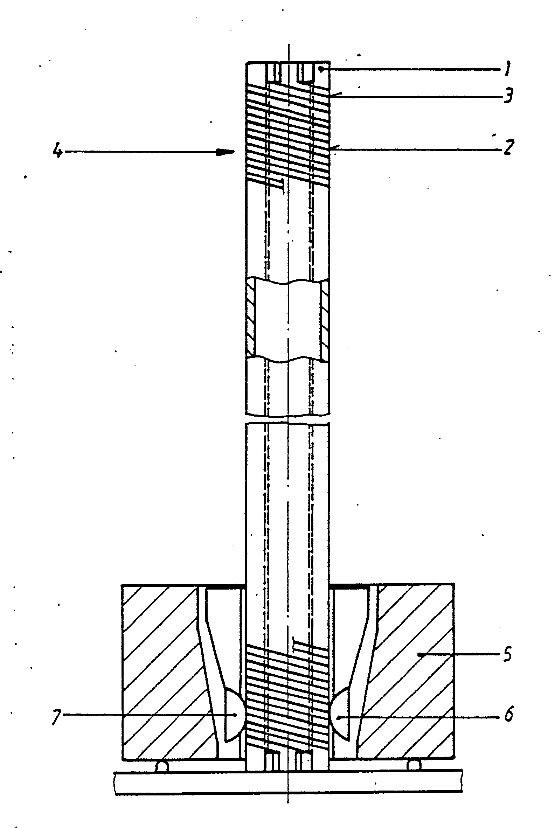

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt einen Längsschnitt durch einen für die Erfindung wesentlichen Bereich eines erfindungsgemäß gestalteten Niveaugebers.

Die Zeichnung zeigt von einem Niveaugeber einen als Wicklungsrohr 1 ausgebildeten Wicklungsträger, der aus einem elektrisch isolierenden Kunststoff besteht. Auf diesem Wicklungsrohr 1 sind parallel zueinander zwei Widerstandsdrähte 2, 3 schraubenlinienförmig gewickelt, so daß insgesamt eine bifilare Wicklung 4 entsteht. Die Widerstandsdrähte 2, 3 sind elektrisch unterschiedlich gepolt.

Auf dem Wicklungsrohr 1 ist ein Schwimmer 5 höhenverschieblich angeordnet, der einander gegenüberliegend zwei geringfügig in der Höhe versetzte Schleifer 6, 7 hat. Die Schleifer 6, 7 vermögen jeweils zwei benachbarte Abschnitte der Widerstandsdrähte 2, 3 zu überbrücken, so daß sie einen Stromkreis schließen. Der Höhenversatz der Schleifer 6, 7 ist derart, daß in allen Höhenlagen des Schwimmers 6 zumindest ein Schleifer 6 oder 7 eine solche Überbrückung herbeiführt.

## Ansprüche

1. Niveaugeber, insbesondere für Kraftstoffbehälter von Kraftfahrzeugen, welcher auf einem Wicklungsträger eine elektrische Wicklung hat, gegen welche ein Schleifer eines entlang des Wicklungsträgers verschieblichen Schwimmers anliegt, dadurch gekennzeichnet, daß die Wicklung (4) von zwei sich gegenseitig nicht berührenden, parallel zueinander verlaufenden und an unterschiedlichen Polen angeschlossenen Widerstandsdrähten (2, 3) gebildet ist.

2. Niveaugeber nach Anspruch 1, dadurch gekennzeichnet, daß der Schwimmer (5) mehrere in der Höhe geringfügig zueinander versetzte Schleifer (6, 7) hat.

3. Niveaugeber nach den Ansprüchen 1 oder 2, dadurch gekennzeichnet, daß der Schwimmer (5) zwei gegenüberliegende, in der Höhe geringfügig zueinander versetzte Schleifer (6, 7) hat.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C- 875 010 (HARTMANN) <br> * Seite 3, Zeilen 6-35; Figur 1 * <br> --- | 1-3 | G 01 F 23/68 |
| X | CH-A- 444 516 (BERTRAM) <br> * Spalte 4, Zeile 23 - Spalte 7, Zeile 48; Figuren 1-4 * <br> --- | 1,2 | |
| X | FR-A-2 115 093 (COMPTEURS) <br> * Seite 2, Zeilen 15-29; Figuren 1,2 * <br> --- | 1 | |
| A | DE-C- 346 502 (RATTI) <br> * Seite 2, Zeilen 56-63; Figur 2 * <br> --- | 2,3 | |
| E | WO-A-8 905 443 (SCANDMEC) <br> * Seite 3, Zeile 1 - Seite 4, Zeile 35; Figuren 1-3 * <br> ----- | 1-3 | |

RECHERCHIERTE SACHGEBIETE (Int. Cl.5)

G 01 F

Der vorliegende Recherchenbericht wurde für alle Patentansprüche erstellt

| Recherchenort | Abschlußdatum der Recherche | Prüfer |
|---|---|---|
| DEN HAAG | 02-05-1990 | HEINSIUS R. |